# FASCICULE DE BREVET EUROPEEN

(11) **EP 0 484 206 B1**
(45) Date de publication et mention de la délivrance du brevet: **04.01.1995**
(21) Numéro de dépôt: 91402832.9
(22) Date de dépôt: 23.10.1991
(51) Int. Cl.: F02D 21/08

(54) **Procédé pour réduire les composants nocifs dans les gaz d'échappement et moteur qui le met en oeuvre**
Verfahren zur Reduzierung von Schadstoffen in Abgasen und Motor dazu
Method for reducing noxious components in exhaust gases and engine for use therewith

(30) Priorité: 30.10.1990 FR 9013602
(43) Date de publication de la demande: 06.05.1992
(73) Titulaire: INSTITUT FRANCAIS DU PETROLE, 92502 Rueil-Malmaison (FR)
(72) Inventeur: Gatellier, Bertrand, F-92100 Boulogne (FR)

(56) Documents cités:
- CH-A- 530 554
- DE-A- 2 750 537
- DE-A- 3 146 654
- FR-A- 1 560 334
- US-A- 4 173 203
- US-A- 4 875 455
- PATENT ABSTRACTS OF JAPAN vol. 8, no. 20 (M-271)(1457) 27 Janvier 1984 & JP-A-58 180 742 ( NISSAN JIDOSHA K.K. ) 22 Octobre 1983

## Description

La présente invention concerne un procédé pour réduire les composants nocifs dans les gaz brûlés qui s'échappent d'un moteur à combustion interne et augmenter la puissance qu'il fournit par recyclage d'une partie de ces gaz brûlés.

La mise en oeuvre du procédé permet notamment de respecter les normes de plus en plus sévères appliquées aux moteurs à allumage commandé. Des études ont montré en effet que le recyclage d'une partie des gaz s'échappant des cylindres entraîne non seulement une réduction des oxydes d'azote émis mais aussi une baisse significative des hydrocarbures imbrûlés en quantité notable vers la fin de la phase d'échappement. La principale difficulté à résoudre est le contrôle du débit des gaz recyclés en fonction des conditions de fonctionnement du moteur.

Le principe du prélèvement d'une fraction des gaz brûlés par un moteur dans les conduits d'échappement et leur réintroduction après refroidissement dans les canaux d'admission des cylindres pour diminuer les rejets extérieurs de certains composants nocifs, est connu. Un tel recyclage peut être mis en oeuvre de plusieurs façons.

Par le brevet CH-530.554, on connait un procédé et un dispositif permettant de faire du recyclage de gaz d'échappement et qui est mis en oeuvre par une réouverture partielle des soupapes d'échappement durant la phase d'admission de gaz frais, pour réaspirer dans chaque cylindre une partie des gaz brûlés expulsés à la fin du cycle de combustion précédent. Ce procédé est mis en oeuvre essentiellement par une modification de la forme des cames commandant les soupapes d'échappement de manière à imposer une réouverture partielle supplémentaire. Ce procédé qui est appliqué sur des moteurs à deux soupapes par cylindre, ne permet pas d'obtenir un effet optimal quelles que soient les conditions de fonctionnement du moteur du fait que la réouverture partielle de la soupape d'échappement est imposée par la forme choisie pour la came de commande et donc immuable.

On connait aussi des procédés pour améliorer le rendement d'un moteur avec pour effet induit un meilleur respect des normes relatives aux gaz d'échappement, ces procédés étant mis en oeuvre dans des moteurs pourvus d'une double soupape d'admission par cylindre, le principe étant de moduler le flux d'air passant par l'une des deux soupapes d'admission. L'art antérieur pour ce type de moteur est décrit par exemple dans l'article de SAE Technical Paper Series No. 900227, par Mikulic et al.

Par le brevet US 4 173 203, on connaît un système pour diminuer les rejets d'un moteur à combustion interne comportant par cylindre une soupape d'admission supplémentaire reliée à un circuit d'admission d'air comportant une pompe, un réservoir de stockage de l'air comprimé par la pompe et un circuit auxiliaire permettant de dériver vers l'entrée de la pompe une partie contrôlée des gaz d'échappement du moteur.

Par le brevet DE 31 46 654, on connaît un système analogue où l'on réinjecte dans les cylindres par une soupape auxiliaire une partie contrôlée des gaz prélevée à l'échappement, après les avoir comprimés et stockés dans une capacité de stockage.

On vérifie à l'expérience que le taux de rejets nocifs varie au cours de chaque phase d'échappement avec une pointe vers la fin de celui-ci et que la réduction de rejets nocifs est meilleure si l'on peut recycler plus particulièrement ces pointes. Or l'existence d'un circuit de recyclage assez long avec des moyens de compression et de stockage de fractions de gaz brûlés a pour effet de diluer les pointes en question. L'effet des recyclages sur la nocivité des rejets est amoindri de ce fait. Cette dilution peut même conduire à une dégradation de la combustion et qui plus est conduire à une augmentation du taux d'hydrocarbures imbrûlés.

Le procédé selon la présente invention permet de réduire les rejets nocifs d'un moteur à quatre temps à combustion interne et d'augmenter sa puissance en évitant les inconvénients des procédés antérieurs. Il s'applique à un moteur comportant par cylindre au moins une soupape d'admission reliée par un conduit d'admission de gaz frais pendant une phase d'admission et au moins une soupape d'échappement reliée à un conduit d'échappement de gaz brûlés durant une phase d'échappement, et il comporte une reinjection d'une fraction du volume des gaz brûlés.

Le procédé est caractérisé par les caractéristiques selon la revendication 1.

Suivant un mode de réalisation, ledit recyclage est effectué en reliant l'extrémité du conduit auxiliaire opposée à la première, avec l'intérieur du cylindre par l'intermédiaire d'une soupape auxiliaire commandée de façon que son intervalle de temps d'ouverture soit positionné autour du point mort haut d'admission, sa position étant choisie en fonction de la charge du moteur.

Avec le circuit de recyclage très court établi directement entre le conduit d'admission et le cylindre, on obtient dans tous les cas une diminution très sensible de la fraction des hydrocarbures imbrûlés et le plus souvent une amélioration de son rendement.

On fait varier par exemple l'importance du recyclage entre une première valeur minimale et une deuxième valeur maximale convenant pour des charges du moteur supérieures à un seuil fixé, en fonction de la vitesse de rotation du moteur et de la dépression régnant à l'admission.

La première valeur minimale est choisie par exemple pour des faibles vitesses de rotation et des faibles charges du moteur. Cette valeur minimale peut être choisie aussi pour les fortes charges du moteur.

On peut régler le calage de la soupape auxiliaire de manière qu'elle serve aussi pour l'injection de gaz frais.

On contrôle le recyclage par exemple au moyen d'un élément d'obturation interposé sur le conduit auxiliaire ou bien encore par une modification de l'intervalle de temps d'ouverture de la soupape auxiliaire.

L'application du procédé selon l'invention permet d'obtenir une diminution substantielle des rejets de substances nocives telles que les oxydes d'azote et les hydrocarbures imbrûlés. C'est vrai notamment dans le mode de mise en oeuvre ou le conduit auxiliaire est connecté au conduit d'admission, la fraction recyclée étant prélevée dans le cylindre même, en fin de la période d'échappement où la proportion de mélange imbrûlé est la plus grande.

En outre, dans tous les cas où la soupape auxiliaire sert aussi pour l'admission dans le cylindre, l'application du procédé selon l'invention conduit à une augmentation du flux d'injection et donc à une amélioration du rendement.

Le moteur à combustion interne à quatre temps mettant en oeuvre le procédé comporte au moins un cylindre pourvu d'au moins une soupape d'admission reliée à un conduit d'admission de gaz frais et au moins une soupape d'échappement reliée à un conduit d'échappement de gaz brûlés.

Il est caractérisé par les caractéristiques selon la revendication 2.

Les moyens de contrôle comportent par exemple une soupape auxiliaire interposée sur le conduit auxiliaire ou un élément d'obturation variable à ouverture commandée interposé sur ledit conduit auxiliaire.

Les moyens de contrôle peuvent comporter aussi des organes pour faire varier l'intervalle de temps d'ouverture de la soupape auxiliaire, ces organes étant par exemple du type électro-magnétique.

D'autres avantages du procédé et du moteur selon l'invention apparaîtront mieux à la lecture de la description ci-après de modes de réalisation décrits à titre d'exemples non limitatifs, en se référant aux dessins annexés où :
- la figure 1 montre de façon schématique, une vue partielle d'un cylindre avec sa soupape auxiliaire permettant la mise en oeuvre de l'invention suivant un premier mode de réalisation;
- la figure 2 montre en fonction de la position angulaire du vilebrequin, les courbes respectives de levée de la soupape d'échappement et des deux soupapes d'admission, la principale et l'auxiliaire, au cours d'un même cycle du moteur;
- les figures 3 à 5 montrent des courbes similaires avec des calages différents selon que le moteur fonctionne à faible charge, à charge moyenne ou à forte charge; et

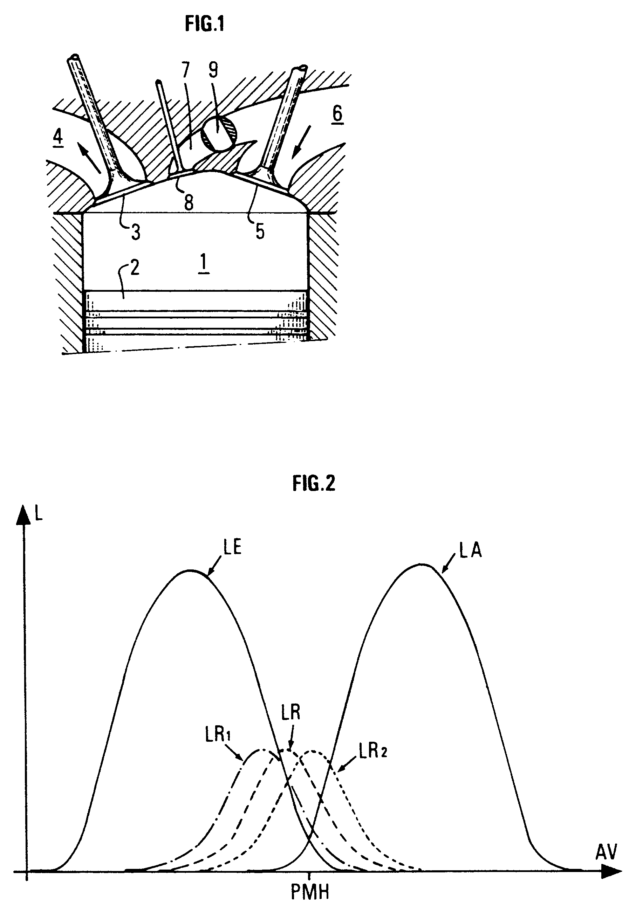

On voit sur la figure 1 que le cylindre 1 (ou chacun d'eux) dans lequel coulisse un piston 2, communique par une soupape d'échappement 3 avec un conduit d'échappement 4. Il communique aussi par l'intermédiaire d'une soupape principale d'admission 5 avec un conduit d'admission 6. Les moyens de commande permettant l'ouverture cyclique des deux soupapes 3 et 5 sont d'un type connu, à cames par exemple, et ne sont pas représentés.

Le moteur selon l'invention se distingue essentiellement par l'existence d'une possible communication auxiliaire contrôlée entre le conduit d'admission et le cylindre 1. Cette communication contrôlée est effectuée au moyen d'un conduit auxiliaire 7 débouchant dans le cylindre 1 par l'intermédiaire d'une soupape auxiliaire 8, et dans le conduit d'admission 6. Un moyen de contrôle tel qu'un boisseau 9 relié à des moyens de commande extérieurs au moteur et non représentés, est disposé dans la conduite auxiliaire 7. L'ouverture de la soupape auxiliaire 8 est par exemple commandée cycliquement comme celle des deux soupapes principales 3 et 5, au moyen d'une came par exemple.

Les moyens de commande de la soupape auxiliaire 8 sont agencés pour que son intervalle de temps d'ouverture se produise autour du point mort haut (PMH) d'admission et donc recouvre partiellement les intervalles correspondants des deux soupapes 3 et 5. Ceci permet un échappement à chaque cycle d'une fraction du volume de gaz brûlés par la soupape auxiliaire 8 via le conduit 7 vers le conduit d'admission 6, cette fraction étant réintroduite dans le cylindre principalement par la soupape d'admission principale 5. On voit sur la figure 2 que, selon le réglage de la soupape auxiliaire 8 qui déplace plus ou moins sa courbe d'ouverture LR relativement à celle (LE) de la soupape d'échappement 3 entre deux positions extrêmes LR1, LR2, la durée de ré-introduction de gaz brûlés est plus ou moins grande.

Suivant un autre mode de réalisation, on utilise une soupape auxiliaire et des moyens de commande permettant de faire varier la "fenêtre" d'ouverture aussi bien en durée qu'en position et dans ce cas, le moyen d'obturation 9 peut être éventuellement supprimé.

A titre d'exemple, on peut répartir les fenêtres d'ouverture des trois soupapes par rapport au point mort haut (PMH) et du point mort bas (PMB) et par référence à la position angulaire (°v) du vilebrequin, comme indiqué ci-dessous.

Les différents calages sont donnés pour une même hauteur minimale de levée des soupapes de 0,7 mm par exemple, les trois soupapes étant levées par des moyens conventionnels à cames.

| | | | | | |
|---|---|---|---|---|---|
| Admission | 0 | 44 | ouverture | 1°v | avant PMH |
| | | | fermeture | 46°v | après PMB |
| Echappement | 0 | 36 | ouverture | 43°v | avant PMB |
| | | | fermeture | 3°v | avant PMH |
| 3ème soupape | 0 | 16 | ouverture | 70°v | avant PMH |
| | | | | 70°v | après PMH |

La hauteur de levée maximale de la soupape auxiliaire 8 est différente de celle des deux soupapes principales 3, 5.

Les valeurs ci-dessus peuvent être modifiées lorsque l'on utilise le procédé selon l'invention pour un moteur où chaque cylindre comporte deux soupapes d'admission avec un conduit d'admission 6 débouchant tangentiellement dans le cylindre pour obtenir par turbulence (swirl), une meilleure aérodynamique et un autre conduit dit neutre que l'on contrôle par un boisseau ou volet 9. Dans ce cas, le conduit tangentiel est le conduit 6, et le conduit neutre est le conduit auxiliaire 7 avec son volet ou boisseau d'obturation 9 comme décrit précédemment. Le volet 9 est fermé pour les faibles charges et la soupape d'admission principale 5 est ouverte un peu avant le PMH et fermée au voisinage du PMB. De même, on répartie la fenêtre d'ouverture de la soupape auxiliaire 8 entre 40°v avant le PMH et 50°v après le PMB.

Le volet ou boisseau de contrôle 9 permet de moduler le débit de gaz brûlés réadmis pendant le temps d'ouverture de la soupape auxiliaire. On peut choisir par exemple les réglages suivants :
- très faibles charges et ralenti (PMI 2 bars) : volet fermé
- charges moyennes et fortes (PMI 4 bars) : volet ouvert

On peut aussi dans certains cas, fermer le volet de contrôle quand le moteur fonctionne à pleine charge.

Entre ces deux états, un système de contrôle module l'ouverture du volet en fonction du régime du moteur et de la dépression à l'admission.

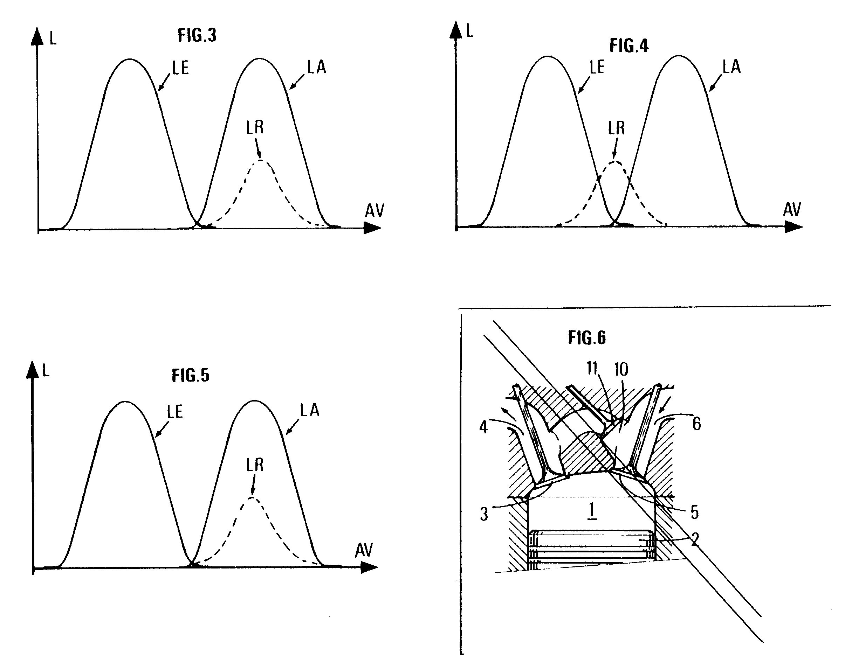

Si l'on dispose d'une soupape 8 pourvue d'un système de commande permettant de modifier de façon plus étendue la position de sa fenêtre d'ouverture de part et d'autre du point mort haut (PMH), on peut encore élargir les possibilités d'intervention en fonction de la charge du moteur comme le montrent les Fig.3 à 5, de manière à combiner au mieux la puissance délivrée et un taux bas de composants nocifs dans les gaz brûlés.

Pour les charges faibles (Fig.3), on supprime par exemple tout recyclage de gaz. Si la soupape 8 est ouverte à chaque cycle par des moyens de commande de type mécanique, par exemple une came et des moyens de déphasage, on décale de préférence la fenêtre d'ouverture LR totalement vers la courbe d'admission LA et l'on ferme le boisseau 9. Dans le cas où la soupape est du type à commande électromagnétique, on modifie sa commande pour qu'elle reste fermée.

Pour les charges moyennes, on positionne la fenêtre d'ouverture autour du point mort haut (Fig.4) en réglant la durée de réintroduction de gaz brûlés en fonction de la charge.

Pour les charges plus fortes (Fig.5), on décale encore totalement la fenêtre d'ouverture LR vers la courbe d'admission LA de façon à la faire fonctionner en soupape d'admission supplémentaire. Le positionnement relatif des différentes courbes (Fig. 5) est analogue à celui de la Fig. 3 mais ici, on dose l'effet d'admission supplémentaire en ouvrant plus ou moins le boisseau de contrôle 9.

Dans le mode de mise en oeuvre du procédé qui a été décrit, le recyclage des gaz brûlés était effectué en reliant le conduit auxiliaire 8 au conduit d'admission.

Le procédé selon l'invention s'applique principalement aux moteurs à quatre temps à allumage commandé, éventuellement suralimentés et éventuellement pourvus d'un système d'injection directe.

Dans tous les cas, on obtient une diminution très sensible dans les gaz d'échappement, du taux d'oxyde d'azote et des hydrocarbures imbrûlès et en même temps, un meilleur remplissage des cylindres.

## Revendications

1. Procédé pour réduire les rejets nocifs d'un moteur à quatre temps à combustion interne et augmenter sa puissance, ce moteur comportant par cylindre au moins une soupape d'admission (5) reliée par un conduit d'admission de gaz frais pendant une phase d'admission et au moins une soupape d'échappement (3) reliée à un conduit d'échappement de gaz brûlés durant une phase d'échappement, par une réinjection d'une fraction du volume de gaz brûlés, caractérisé en ce qu'il comporte:
- l'établissement d'un recyclage direct de gaz brûlés au moyen d'un conduit auxiliaire court (7) communiquant à une première extrémité avec ledit conduit d'admission, et à une deuxième extrémité directement avec le cylindre, ce conduit auxiliaire étant associé à des moyens d'ouverture intermittente; et
- le contrôle à chaque cycle des moyens d'ouverture intermittente de façon à délimiter pendant la phase d'admission, un intervalle de temps de recyclage dont la durée ou le déphasage par rapport au point mort haut, sont choisis de façon à recycler, pour certaines conditions de fonctionnement du moteur, une fraction de gaz brûlés riche en rejets nocifs.

2. Moteur à combustion interne à quatre temps comportant au moins un cylindre pourvu d'au moins une soupape d'admission (5) reliée à un conduit (6) d'admission de gaz frais et au moins une soupape d'échappement (3) reliée à un conduit (4) d'échappement de gaz brûlés, et des moyens de communication permettant une réadmission contrôlée de gaz brûlés dans ledit cylindre, caractérisé en ce que lesdits moyens de communication comportent un conduit auxiliaire (7) raccordé avec le conduit d'admission à une première extrémité et directement avec le cylindre à une deuxième extrémité, associé à des moyens (8,9) d'ouverture intermittente du conduit, ce conduit auxiliaire étant assez court pour permettre un réinjection directe de gaz brûlés, et des moyens de commande adaptés à actionner les moyens d'ouverture durant un intervalle de temps de recyclage dont la durée ou le déphasage par rapport au point mort haut, sont choisis de façon à recycler, pour certaines conditions de fonctionnement du moteur, une fraction de gaz brûlés riche en rejets nocifs.

3. Moteur selon la revendication 2, caractérisé en ce que la deuxième extrémité du conduit auxiliaire (7) communique avec l'intérieur du cylindre par l'intermédiaire d'une soupape auxiliaire (8) commandée par les moyens de commande.

4. Moteur selon la revendication 2 ou 3, caractérisé en ce que les moyens de commande sont adaptés à faire varier l'importance dudit recyclage entre une première valeur minimale et une deuxième valeur maximale convenant pour des charges du moteur supérieures à un seuil fixé, en fonction de la vitesse de rotation du moteur et de la dépression régnant à l'admission.

5. Moteur selon la revendication 4, caractérisé en ce que la première valeur minimale est choisie pour des faibles vitesses de rotation et des faibles charges du moteur.

6. Moteur selon la revendication 4 ou 5, caractérisé en ce que ladite valeur minimale est choisie pour les fortes charges du moteur.

7. Moteur selon l'une des revendications 3 à 6, caractérisé en ce que les moyens de commande sont adaptés à régler le calage de la soupape auxiliaire (8) de manière qu'elle serve aussi pour l'injection de gaz frais.

8. Moteur selon l'une des revendications 3 à 7, caractérisé en ce qu'il comporte un élément d'obturation (9) interposé sur le conduit auxiliaire (7) et actionné par lesdits moyens de commande.

9. Moteur selon l'une des revendications 3 à 7, caractérisé en ce que les moyens de commande sont adaptés à modifier l'intervalle de temps d'ouverture de la soupape auxiliaire (8).

10. Moteur selon l'une des revendications précédentes, caractérisé en ce que lesdits moyens d'ouverture sont du type électro-magnétique.

## Claims

1. A method for reducing harmful discharge from a four stroke internal combustion engine and increasing its power, this engine having at least one inlet valve (5) per cylinder connected by means of a pipe for inducing fresh gas during an induction phase and at least one exhaust valve (3) connected to a pipe for exhausting burnt gases during an exhaust phase, by re-injecting a fraction of the volume of burnt gases, characterised in that it comprises:
- inclusion of a direct recycling of burnt gases via a short auxiliary pipe (7) communicating at a first end with the intake pipe and at a second end with the cylinder, this auxiliary pipe operating in conjunction with intermittent opening means; and
- the control at each cycle of intermittent opening means so that a recycling period is established during the induction phase, the duration or phase shift relative to top dead centre being selected so that under certain operating conditions of the engine a fraction of burnt gases high in harmful discharge is recycled.

2. A four stroke internal combustion engine having at least one cylinder provided with at least one inlet valve (5) connected to an intake pipe (6) for fresh gas and at least one exhaust valve (3) connected to an exhaust pipe (4) for burnt gases and communication means allowing controlled re-induction of burnt gases into the cylinder, characterised in that the communication means comprise an auxiliary pipe (7) linked to the intake pipe at a first end and directly to the cylinder at a second end, operating in conjunction with means (8,9) for intermittently opening the pipe, this auxiliary pipe being quite short so as to allow direct re-injection of the burnt gases and control means designed to actuate the opening means during a period of recycling time, the duration or phase shift relative to top dead centre being selected so as to recycle fraction of burnt gases high in levels of harmful discharge under certain operating conditions of the engine.

3. An engine in accordance with claim 2, characterised in that the second end of the auxiliary pipe (7) communicates with the interior of the cylinder by means of an auxiliary valve (8) regulated by control means.

4. An engine in accordance with claim 2 or 3, characterised in that the control means are adapted to vary the level of recycling between a first minimum value and a second maximum value appropriate for the engine charges above a fixed threshold depending on the rotation speed of the engine and the decompression level prevailing during induction.

5. An engine in accordance with claim 4, characterised in that the first minimum value is selected for low rotation speeds and low engine charges.

6. An engine in accordance with claim 4 or 5, characterised in that this minimum value is selected for high engine charges.

7. An engine in accordance with one of claims 3 to 6, characterised in that the control means are designed to regulate the timing of the auxiliary valve (8) so that it may also be used to inject fresh gas.

8. An engine in accordance with claims 3 to 7, characterised in that it comprises a blocking element (9) interposed on the auxiliary pipe (7) and actuated by the control means.

9. An engine in accordance with one of claims 3 to 7, characterised in that the control means are designed to adjust the interval of time during which the auxiliary valve (8) is open.

10. An engine in accordance with one of the preceding claims characterized in that the opening means are of the electromagnetic type.

## Patentansprüche

1. Verfahren zur Verminderung schädlicher Austragsstoffe eines Viertaktmotors mit innerer Verbrennung und zur Erhöhung seiner Leistung, wobei dieser Motor pro Zylinder wenigstens ein Einlaßventil (5) umfaßt, das über eine Einlaßleitung für frische Gase während einer Einlaßphase verbunden ist und wenigstens ein Auslaßventil (3), das mit einer Auslaßleitung für verbrannte Gase während einer Auslaßphase verbunden ist, durch eine Reinjektion einer Fraktion des Volumens verbrannter Gase, dadurch gekennzeichnet, daß es umfaßt:
- Herstellung einer direkten Rezyklisierung verbrannter Gase vermittels einer kurzen Hilfsleitung (7), die an einem ersten Ende mit dieser Einlaßleitung und an einem zweiten Ende direkt mit dem Zylinder in Verbindung steht, wobei diese Hilfsleitung Mitteln zum intermittierenden Öffnen zugeordnet ist und
- Regelung der Mittel zum intermittierenden Öffnen bei jedem Takt, derart, daß während der Einlaßphase ein Rezyklisierungszeitintervall begrenzt wird, dessen Dauer oder Außer-Phase-Kommen bezogen auf den oberen Totpunkt derart gewählt sind, daß für gewisse Arbeitsbedingungen des Motors eine Fraktion der an schädlichen Austragsstoffen reichen Fraktion rezyklisiert wird.

2. Viertaktverbrennungsmotor mit wenigstens einem Zylinder, der mit einem Einlaßventil (5) versehen ist, welches mit einer Einlaßleitung (6) für frische Gase und wenigstens einem Auslaßventil (3) versehen ist, das mit einer Auslaßleitung (4) für die verbrannten Gase verbunden ist, und Verbindungsmitteln, die einen geregelten Wiedereinlaß verbrannter Gase in diesen Zylinder ermöglichen, dadurch gekennzeichnet, daß diese Verbindungsmittel eine Hilfsleitung (7) umfassen, die mit der Einlaßleitung an einem Ende und direkt mit dem Zylinder an einem zweiten Ende, in Zuordnung zu Mitteln (8, 9) zum intermittierenden Öffnen der Leitung verbunden ist, wobei diese Hilfsleitung ziemlich kurz ist, um eine direkte Reinjektion verbrannter Gase zu ermöglichen und Steuermitteln, die so ausgebildet sind, daß sie diese Öffnungsmittel während eines Rezyklisierungszeitintervalls betätigen, dessen Dauer oder Außer-Phase-Kommen, bezogen auf den oberen Zeitpunkt so gewählt sind, daß für gewisse Bedingungen des Betriebs des Motors eine Fraktion der verbrannten an schädlichen Austragsstoffen reichen Fraktion rezyklisiert wird.

3. Motor nach Anspruch 2, dadurch gekennzeichnet, daß das zweite Ende der Hilfsleitung (7) mit dem Inneren des Zylinders vermittels eines durch die Steuermittel gesteuerten Hilfsventils (8) in Verbindung steht.

4. Motor nach Anspruch 2 oder 3, dadurch gekennzeichnet, daß die Steuermittel so ausgelegt sind, daß sie die Größe dieser Rezyklisierung zwischen einem ersten Minimalwert und einem zweiten Maximalwert variieren lassen, der für Chargen des Motors oberhalb eines festgelegten Schwellenwerts als Funktion der Drehgeschwindigkeit des Motors und des am Einlaß herrschenden Unterdrucks zweckmäßig ist.

5. Motor nach Anspruch 4, dadurch gekennzeichnet, daß der erste Minimalwert gewählt wird für geringe Drehgeschwindigkeiten und geringe Motorlasten.

6. Motor nach Anspruch 4 oder 5, dadurch gekennzeichnet, daß dieser Minimalwert gewählt ist für die großen Motorlasten.

7. Motor nach einem der Ansprüche 3 bis 6, dadurch gekennzeichnet, daß die Steuermittel so ausgelegt sind, daß sie die optimale Einstellung des Hilfsventils (8) derart regeln, daß es auch für die Injektion frischen Gases dient.

8. Motor nach einem der Ansprüche 3 bis 7, dadurch gekennzeichnet, daß er ein Schließelement (9) umfaßt, das in der Hilfsleitung (7) zwischengeschaltet und durch diese Steuermittel betätigt ist.

9. Motor nach einem der Ansprüche 3 bis 7, dadurch gekennzeichnet, daß die Steuermittel so ausgelegt sind, daß sie das Öffnungszeitintervall des Hilfsventils (8) modifizieren.

10. Motor nach einem der vorhergehenden Ansprüche, dadurch gekennzeichnet, daß diese Öffnungsmittel vom elektromagnetischen Typ sind.
